# EUROPÄISCHE PATENTSCHRIFT

(11) **EP 2 137 615 B1**
(45) Veröffentlichungstag und Bekanntmachung des Hinweises auf die Patenterteilung: **15.11.2017**
(21) Anmeldenummer: 08717395.1
(22) Anmeldetag: 05.03.2008
(51) Int. Cl.: G06F 9/45

(54) **VERFAHREN ZUM RECHNERGESTÜTZTEN ERMITTELN DER ABHÄNGIGKEITEN EINER VIELZAHL VON MODULEN EINES TECHNISCHEN SYSTEMS, INSBESONDERE EINES SOFTWARESYSTEMS**
METHOD FOR THE COMPUTER-AIDED DETERMINATION OF THE DEPENDENCIES OF A PLURALITY OF MODULES OF A TECHNICAL SYSTEM, ESPECIALLY OF A SOFTWARE SYSTEM
PROCÉDÉ DE DÉTERMINATION ASSISTÉE PAR ORDINATEUR DES DÉPENDANCES D'UNE PLURALITÉ DE MODULES D'UN SYSTÈME TECHNIQUE, NOTAMMENT D'UN SYSTÈME LOGICIEL

(30) Priorität: 20.03.2007 DE 102007013396; 25.06.2007 DE 102007029133
(43) Veröffentlichungstag der Anmeldung: 30.12.2009
(73) Patentinhaber: Siemens Aktiengesellschaft, 80333 München (DE)
(72) Erfinder: MANGOLD, Florian, 81549 München (DE); HAMMER, Moritz, 81377 München (DE); MAJEWSKI, Kurt, 81541 München (DE); MOLL, Christoph, 81549 München (DE); RÖLLE, Harald, 81739 München (DE); WASGINT, Rainer, 81739 München (DE)
(86) Internationale Anmeldenummer: PCT/EP2008/052641
(87) Internationale Veröffentlichungsnummer: WO 2008/113682

(56) Entgegenhaltungen:
- WO-A-98/03917
- WO-A-2008/040662
- US-A- 5 828 883
- US-A1- 2003 056 199
- US-B1- 6 266 805
- US-B1- 6 381 735
- JUN LI ED - INSTITUTE OF ELECTRICAL AND ELECTRONICS ENGINEERS: "Monitoring and characterization of component-based systems with global causality capture" PROCEEDINGS OF THE 23RD. INTERNATIONAL CONFERENCE ON DISTRIBUTED COMPUTING SYSTEMS. ICDCS 2003. PROVIDENCE, RI, MAY 19 - 22, 2003; [INTERNATIONAL CONFERENCE ON DISTRIBUTED COMPUTING SYSTEMS], LOS ALAMITOS, CA : IEEE COMP. SOC, US, Bd. CONF. 23, 19. Mai 2003 (2003-05-19), Seiten 422-431, XP010642312 ISBN: 978-0-7695-1920-3
- BERMUDO N ET AL: "Control Flow Graph Reconstruction for Assembly Language Programs with Delayed Instructions" 30. September 2005 (2005-09-30), SOURCE CODE ANALYSIS AND MANIPULATION, 2005. FIFTH IEEE INTERNATIONAL WORKSHOP ON BUDAPEST, HUNGARY 30-01 SEPT. 2005, PISCATAWAY, NJ, USA,IEEE, PAGE(S) 107 - 118 , XP010854097 ISBN: 978-0-7695-2292-0 das ganze Dokument
- MICHAEL D SMITH: "Overcoming the Challenges to Feedback-Directed Optimization" ACM SIGPLAN NOTICES, ACM, ASSOCIATION FOR COMPUTING MACHINERY, NEW YORK, NY, US, 1. Januar 2000 (2000-01-01), XP002367030 ISSN: 0362-1340
- "Optimizing Speed vs. Size - Using The CodeBalance Utility For ARM/Thumb and MIPS16 Architectures" INTERNET CITATION, [Online] 30. November 1998 (1998-11-30), XP002174188 Gefunden im Internet: URL:http://www.ghs.com/wp/codebal.pdf> [gefunden am 2001-08-07]

## Beschreibung

Die Erfindung betrifft ein Verfahren zum rechnergestützten Ermitteln der Abhängigkeiten einer Vielzahl von Modulen eines technischen Systems, insbesondere eines Softwaresystems, wobei jedes der Module des Systems einen bekannten ersten Ressourcenverbrauch aufweist.

Komplexe Softwaresysteme umfassen eine Vielzahl an unterschiedlichen und teilweise interagierenden Modulen. Ein Modul kann in diesem Zusammenhang auch eine Methode, Funktion, ... sein. Häufig tritt hierbei das Problem auf, dass die Performanz des Softwaresystems nicht zufriedenstellend ist. Um herauszufinden, welches oder welche Module Verursacher der schlechten Performanz sind, ist ein hohes Verständnis des Softwaresystems notwendig.

Als Analyseinstrument bei der Softwareentwicklung sind sog. Call-Graphen bekannt. Ein Softwaresystem kann als Call-Graph dargestellt und damit einfacher verstanden werden. Der für Programmierer leicht lesbare Graph zeigt verständlich Struktur und Architektur eines Softwaresystems auf. Dieser erleichtert es, das Softwaresystem zu modifizieren und zu testen. Der Call-Graph dokumentiert, erklärt und erhöht das Verständnis für Programmcode und Softwaresysteme.

Call-Graphen bilden Aufrufe, sog. Calls, sowie Abhängigkeiten der einzelnen Komponenten aufeinander als Kanten in dem Graphen ab. Insbesondere bei synchronen Softwaresystemen ist der Call-Graph ein bewährtes Analyse- und Dokumentationswerkzeug. Bei der Analyse, insbesondere der Performanzanalyse, komplexer Multi-Threading-Softwaresysteme stellen Aufrufe jedoch nicht die einzigen Abhängigkeiten des Softwaresystems dar.

Durch gegenseitiges Sperren, gemeinsam benutzte Hardware-Ressourcen und viele andere Dinge entstehen Abhängigkeiten, welche die Laufzeit des Softwaresystems beeinflussen.

Das Dokument US 2003/0056199 A1 offenbart ein Verfahren, das bei der Ausführung eines Computersystems detailliert die Laufzeiten verschiedener Module misst, um aus diesen Informationen eine Darstellung der Abhängigkeiten zu gewinnen.

In der US 6 381 735 B1 offenbart ein Verfahren, das Software-Sektionen einer Software klassifiziert. Dazu werden für die jeweiligen Software-Sektionen bei der Ausführung der Software Nutzprofile erstellt, die die Laufzeit einer Sektion umfassen.

Wünschenswert wäre deshalb ein Werkzeug, welches die Erstellung eines Call-Graphen ermöglicht, der auch Ressourcenverbrauchende Abhängigkeiten in einem Softwaresystem aufzeigt. Ein solcher Abhängigkeitsgraph könnte nicht nur in der Softwareentwicklung und -analyse eingesetzt werden, sondern auch bei der Entwicklung, Analyse und Dokumentation beliebiger technischer Systeme. Abhängigkeitsgraphen erleichtern das Verständnis von zusammenhängenden technischen Systemen.

Es ist daher Aufgabe der vorliegenden Erfindung ein Verfahren anzugeben, das die rechnergestützte Ermittlung der Abhängigkeiten einer Vielzahl von Modulen eines technischen Systems erlaubt.

Diese Aufgabe wird durch die Merkmale der unabhängigen Patentansprüche gelöst. Vorteilhafte Ausführungsformen finden sich in den abhängigen Patentansprüchen.

Bei dem erfindungsgemäßen Verfahren zum rechnergestützten Ermitteln der Abhängigkeiten einer Vielzahl von Modulen eines technischen Systems, insbesondere eines Softwaresystems, wobei jedes der Module des Systems einen bekannte, erste Laufzeit aufweist, wird die erste Laufzeit von jedem der Module des Systems jeweils eindeutig und unterschiedlich um den Logarithmus einer Primzahl verlängert, wodurch ein modifiziertes System erhalten wird. Das modifizierte System wird ausgeführt. Für jedes der Module des modifizierten Systems wird ein zweiter Ressourcenverbrauch gemessen, der sich aus der Veränderung der ersten Laufzeit eines jeden Moduls ergibt. Aus der Analyse des zweiten Ressourcenverbrauchs eines jeweiligen Moduls und dem Logarithmus der Primzahl wird ermittelt, ob eine Abhängigkeit zwischen dem jeweiligen Modul und jedem, in der Laufzeit veränderten Modul besteht.

Das erfindungsgemäße Verfahren verwendet künstliche Varianz, um den Ressourcenverbrauch, d.h. die Laufzeit, zumindest eines der Module gezielt zu verändern, insbesondere zu vergrößern. Durch die Messung des Ressourcenverbrauchs, der sich aufgrund der Veränderung des Ressourcenverbrauchs eines jeden Moduls ergibt, lassen sich Abhängigkeiten rekonstruieren, und in Form eines gerichteten Graphen, insbesondere eines Netzwerks, darstellen. Die Analyse des zweiten Ressourcenverbrauchs eines jeweiligen Moduls in Verbindung mit dem Logarithmus der Primzahl erlaubt nicht nur die Gewinnung von Abhängigkeiten, sondern ebenfalls die Ermittlung von Kapazitätsinformationen, die den Kanten des gerichteten Graphen zugeordnet werden. Die Kapazitätsinformationen stellen ein Maß für die Abhängigkeit der Module dar.

Die Abhängigkeiten der Vielzahl von Modulen des technischen Systems lassen sich unter Verwendung des erfindungsgemäßen Verfahrens ohne Kenntnis des technischen Systems in seiner Gesamtheit, insbesondere im Falle von Softwaresystemen ohne weiteren Code-Review, bestimmen. Dies bedeutet, das zu analysierende technische System kann als Blackbox vorliegen. Der durch das erfindungsgemäße Verfahren erzeugte Graph stellt eine Erweiterung von herkömmlichen, bekannten Call-Graphen dar und ist insbesondere für nebenläufige Systeme gut einzusetzen. Entwickler und Analysten erhalten durch den unter Verwendung des Verfahrens erzeugten Graphen Hinweise, bei welchen Modulen oder Komponenten ein Reengineering oder Refactoring einen Vorteil bringt oder nicht. Mit Hilfe der Erfindung ist es möglich, dynamische und hoch komplexe Systeme zu verstehen. Insbesondere wird hierdurch Optimierungspotential aufgezeigt.

Erfindungsgemäß ist der zweite Ressourcenverbrauch eine Laufzeit des betreffenden Moduls. Die Rekonstruktion von Abhängigkeiten der Module des Systems erfolgt damit durch Laufzeitmessungen der jeweiligen Module des modifizierten Systems.

Erfindungsgemäß wird der jeweilige erste Ressourcenverbrauch eines jeden der Module des Systems eindeutig und unterschiedlich verändert. Dabei ist das vorgegebene Kriterium der Logarithmus einer Primzahl. Anschließend wird das System einmal ausgeführt und der Ressourcenverbrauch sämtlicher Module gemessen. Aus einem jeweiligen Ressourcenverbrauch der Module lässt sich dann der zu erstellende Graph konstruieren. Hierbei wird die gewonnene Ressourcendifferenz zum nicht variierten Modul abgezogen und eine Primfaktorenzerlegung des potenzierten Messwerts durchgeführt. Durch die Primzahlen ist eindeutig bestimmt, von welchen Modulen die Laufzeit eines jeweiligen Moduls abhängt. Aus diesen Informationen ist dann der gerichtete Graph mit den erwünschten Abhängigkeiten erstellbar.

Das Verändern des Ressourcenverbrauchs, d.h. der Laufzeit, insbesondere das Vergrößern des Ressourcenverbrauchs, erfolgt gemäß einer zweckmäßigen Ausgestaltung unter Verwendung aspektorientierter Programmierung. Hierdurch braucht im Falle eines Softwaresystems nicht direkt der Code des Softwaresystems verändert zu werden.

Aus den gewonnenen Abhängigkeiten wird ein gerichteter Graph erstellt. Zweckmäßigerweise werden hierbei die Module des Systems bestimmt, bei denen der zweite Ressourcenverbrauch des betreffenden Moduls sich ausschließlich aus dem ersten Ressourcenverbrauch des Moduls und der gemäß dem vorgegebenen Kriterium vorgenommenen Änderung ergibt. Dieses Vorgehen entspricht dem Auffinden von Quellen in einem Netzwerk. Eine Quelle ist ein Knoten des Graphen ohne eine eingehende Kante. Dies entspricht unabhängigen Modulen, im Fall eines Softwaresystems Codefragmenten, die von keinem anderen Modul (Code) in ihrem Laufzeitverhalten abhängen. Quellen stellen eine wesentliche Information für Analysten und Systementwickler dar, und sollten in einem Graphen deshalb explizit ausgezeichnet werden. Eine Quelle kann dadurch erkannt werden, dass sämtliche Module des Systems um einen gewissen, der Messgenauigkeit angepassten, Ressourcenverbrauch vergrößert werden. Nach einem Starten des Systems und einer Durchführung der Messungen jeweiliger Module sind all diejenigen Module Quellen, die sich nur um diesen Ressourcenverbrauch vergrößert haben. Module, die hingegen von anderen Modulen abhängen, würden durch ihre Abhängigkeiten um mehr als diese Zeit verlängert.

Die Module des Systems stellen Knoten des Graphen dar, zwischen denen Kanten verlaufen, wenn eine Abhängigkeit zwischen zwei Modulen besteht, wobei Kanten mit einem Gewichtungsfaktor versehen werden, der den Grad der Abhängigkeit zwischen zwei Modulen wiedergibt. Der Gewichtungsfaktor kann beispielsweise die Anzahl der Aufrufe eines Moduls durch ein anderes Modul sein. Durch diese Information werden Hinweise erhalten, bei welchen Modulen eine Optimierung einen Vorteil bringt.

Von der Erfindung ist ferner ein Computerprogrammprodukt umfasst, das direkt in den internen Speicher eines digitalen Computers geladen werden kann und Softwarecodeabschnitte umfasst, mit denen die Schritte gemäß einem der vorherigen Ansprüche ausgeführt werden, wenn das Produkt auf einem Computer läuft.

Die Erfindung wird nachfolgend unter Bezugnahme auf die Figuren näher erläutert. Es zeigen:
- Fig. 1: einen Abhängigkeitsgraphen eines ersten Ausführungsbeispiels,
- Fig. 2: einen Abhängigkeitsgraphen eines zweiten Ausführungsbeispiels,
- Fig. 3: einen schematischen Abhängigkeitsgraphen, der durch das erfindungsgemäße Verfahren erhalten wird, und
- Fig. 4: den in Fig. 3 gezeigten Abhängigkeitsgraphen in einer anderen Darstellung, aus der der Grad der Abhängigkeit zwischen zwei Modulen ersichtlich wird.

Die Erfindung wird nachfolgend unter Bezugnahme auf ein Softwaresystem, umfassend eine Vielzahl von Modulen, beschrieben. Die Erfindung kann jedoch nicht nur in der Softwareentwicklung und -analyse eingesetzt werden, sondern auch auf allgemeine technische Systeme zu deren Entwicklung, Analyse und Dokumentation verwendet werden.

Das der Erfindung zugrunde liegende Prinzip basiert auf der Prolongation aller Module des Softwaresystems. Prinzipiell wird hierbei die Laufzeit von Modulen gezielt vergrößert und anschließend das Softwaresystem ausgeführt. Durch Laufzeitmessungen eines beliebigen Moduls können die Abhängigkeiten dieses Moduls auf andere Module rekonstruiert werden. Ist beispielsweise nicht bekannt, ob ein Modul B abhängig von einem Modul A ist, so wird die Laufzeit von Modul A prolongiert. Verändert sich nun die Laufzeit von Modul B entsprechend, so ist ersichtlich, dass Modul B abhängig von Modul A ist.

Der durch das Verfahren gewonnene Graph weist die Form eines Netzwerkes auf, dies bedeutet, er ist gerichtet und seine Kanten können Kapazitätsinformationen tragen. Diese Kapazitätsinformationen können beispielsweise ein Maß für die Abhängigkeit zwischen zwei Modulen darstellen. Wenn beispielsweise aus einer doppelt so langen Laufzeit von Modul A eine vierfach längere Laufzeit von Modul B folgt, kann die Modul A und B verbindende Kante mit einer 2 beschriftet werden.

Eine andere Möglichkeit besteht darin, nicht jede Ausführung als eigene Instanz zu betrachten, wenn Module während einer Programmausführung öfters ausgeführt werden. Stattdessen repräsentiert ein Modul einen Knoten. Die Kanten tragen als Kapazitätsinformationen die Anzahl der Aufrufe. Dadurch kann der Graph enorm vereinfacht werden, wodurch die Übersichtlichkeit steigt.

Die Identifikation bzw. Erzeugung des Graphen kann auf unterschiedliche Weise erfolgen. Um den Graphen mittels einer Prolongation zu erstellen, kann die Laufzeit jedes Moduls des Softwaresystems um einen anderen Wert prolongiert werden. Aus einem beliebigen Modul kann dann aus der Laufzeitdifferenz gegenüber dem unprolongierten Softwaresystem die Kombination der abhängigen Module bestimmt werden.

Grundsätzlich ist es zweckmäßig, wenn die Verlängerung vor dem Ausführen der eigentlichen Funktion erfolgt. Hierdurch wird sichergestellt, dass auch die von einem Modul abhängigen Module warten müssen. Dadurch können mit Hilfe des prolongierten Zeitwertes auch die Module, die warten müssen, identifiziert werden.

Werden natürliche oder reelle Zahlen als Prolongationswerte benutzt, um mehrere Module gleichzeitig auf Abhängigkeiten zu analysieren, so entsteht ein mathematisches Problem. Aus der Laufzeitdifferenz eines beliebigen Moduls kann nicht einfach auf abhängige Module rückgeschlossen werden. Die Erfindung sieht deshalb vor, die Primfaktorenzerlegung einer Zahl zu benutzen, die immer eindeutig ist. Da sich jedoch bei abhängigen Modulen die Laufzeiten addieren und nicht multiplizieren, können die einzelnen Module nicht einfach mit einer Primzahl verlängert werden.

Ausgehend von der Erkenntnis, dass sich die Laufzeiten addieren, kann über den Logarithmus eine multiplikative Funktion gewonnen werden. Der Logarithmus eines Produkts ist die Summe der Logarithmen der Faktoren. Konkret bedeutet dies, wenn jedes Modul um die logarithmierte Laufzeit einer anderen Primzahl prolongiert wird, ist die Primfaktorenzerlegung der potenzierten Laufzeitdifferenzen wieder eindeutig. Damit kann rekonstruiert werden, von welchen Modulen ein gemessenes Modul abhängig ist. Zur effizienten Durchführung des erfindungsgemäßen Verfahrens sollte das Softwaresystem in einem gewissen Rahmen deterministisch und single-threaded sein. Nichtsdestotrotz kann das erfindungsgemäße Verfahren auch auf multi-threaded-Systeme angewendet werden.

Das Vorgehen des erfindungsgemäßen Verfahrens ist wie folgt: Die Laufzeit jedes Moduls des Softwaresystems wird um den Logarithmus einer anderen Primzahl prolongiert. Das Softwaresystem wird ausgeführt und es werden die Laufzeiten der jeweiligen Module gemessen. Bei der Analyse wird die gemessene Laufzeitdifferenz zu dem nicht variierten Modul abgezogen und es wird eine Primfaktorenzerlegung der potenzierten Logarithmen durchgeführt. Durch die Primzahlen kann eindeutig bestimmt werden, von welchen Modulen ein betreffendes Modul abhängt. Hieraus lässt sich der Ressourcen-Abhängigkeits-Graph konstruieren.

Dadurch dass der Logarithmus einer Primzahl zum Verlängern verwendet wird, müssen zur eindeutigen Identifikation der Abhängigkeiten lediglich geringe Werte zur Laufzeit addiert werden. Bei einem deterministischen System muss auch nicht der ganze Graph aus einem Lauf des Systems konstruiert werden, sondern die den Graph beschreibende Adjazenzmatrix kann sukzessiv gefüllt werden, so dass immer nur eine Teilmenge aller Module verlängert werden muss.

Das Vergrößern des Ressourcenverbrauchs um die Logarithmen der Primzahlen geschieht durch Instrumentieren des Codes. Dieses wir bevorzugt durch Aspektorientierte Programmierung durchgeführt. Damit muss der Code eines zu untersuchenden Softwaresystems nicht direkt verlängert werden, sondern das Softwaresystem kann als Blackbox vorliegen.

Das erfindungsgemäße Vorgehen wird nachfolgend anhand eines ersten Ausführungsbeispiels näher erläutert. In Listing 1 ist eine einfache Java-Klasse dargestellt, die in ihrer "main"-Funktion zwei Fakultäten addiert und multipliziert.

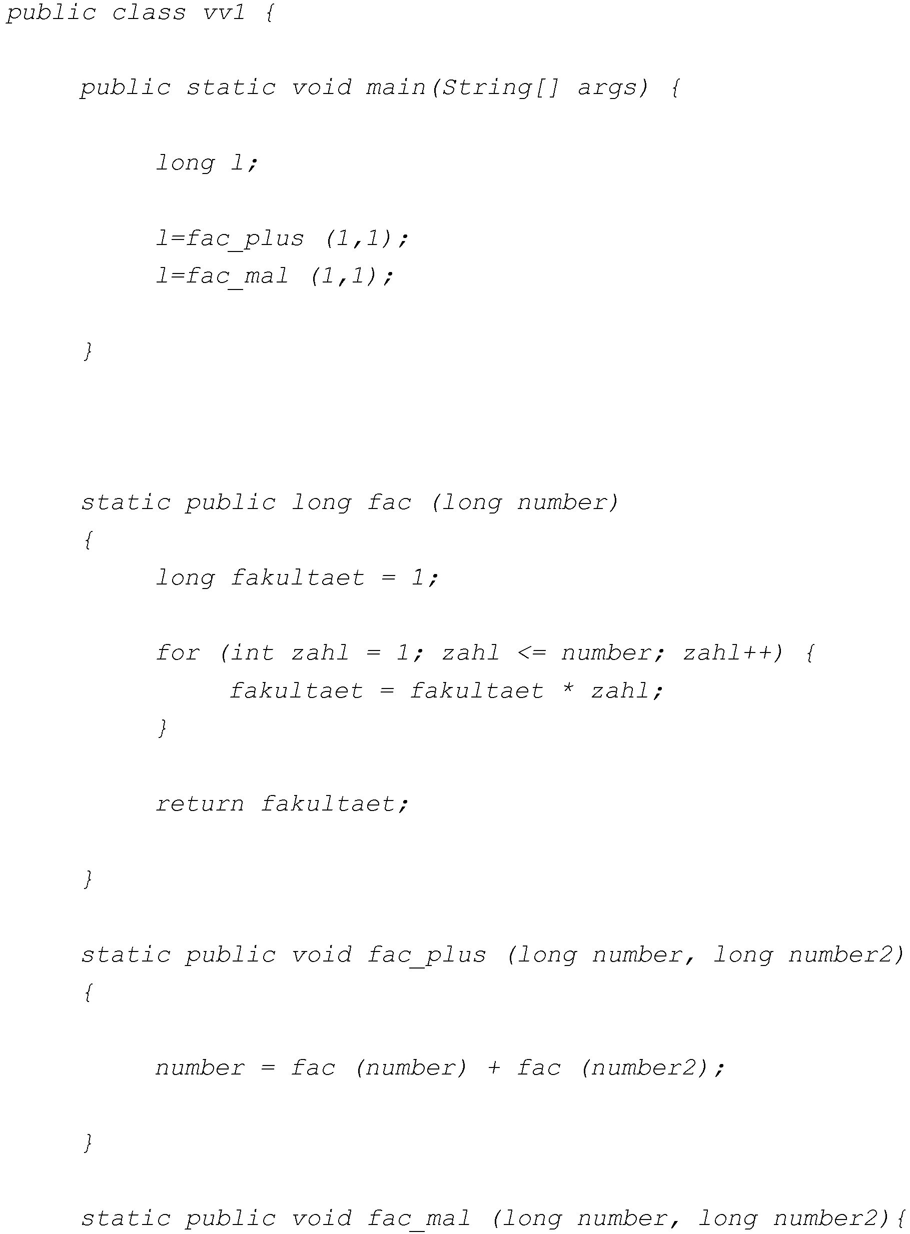

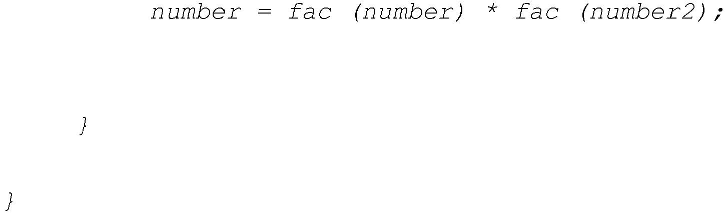

### Listing 1

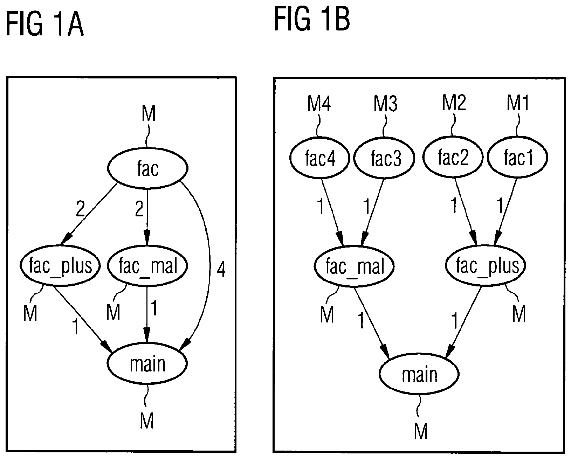

Der resultierende Ressourcen-Abhängigkeits-Graph ist in Fig. 1 dargestellt. In diesem sind mit dem Bezugszeichen M die Module oder Funktionen "fac", "fac_plus", "fac_mal" und "main" gekennzeichnet. Die Module oder Funktionen M stellen Knoten des Graphen dar. In der rechten Hälfe der Fig. 1 wurde jeder Aufruf der Funktion fac als eigene Instanz eingezeichnet (fac1, fac2, fac3 und fac4), wobei diese Knoten mit M1, M2, M3 und M4 gekennzeichnet sind.

Die Ressourcen-Abhängigkeiten des in Listing 1 dargestellten Programms sind in der linken Hälfe der Fig. 1 gut zu erkennen. Die Methode main hängt im Ausführungsbeispiel vierfach von der Methode fac ab. Aus diesem Grund ist die die Methode fac und die Methode main verbindende Kante mit dem Kantengewicht (= Gewichtungsfaktor) 4 beschriftet. Die Methode main ruft über die Methode fac plus und die Methode fac_mal die Methode fac insgesamt viermal auf. In der rechten Hälfte der Fig. 1 ist jeder Aufruf ein eigener Knoten im Graphen. Die Kantengewichte sind damit immer gleich 1. Aus dieser Darstellung ergibt sich die Struktur des in Listing 1 abgebildeten Programms auf gut nachvollziehbare Weise. Die Funktion main ruft die Funktion fac_mal und die Funktion fac plus jeweils einmal auf, die ihrerseits wiederum die Fakultätsmethode fac jeweils zweimal aufrufen.

In einem weiteren Ausführungsbeispiel ist die aus Listing 1 dargestellte Java-Klasse erweitert. In ihrer Main-Funktion werden zwei Fakultäten addiert, multipliziert und potenziert. Dies ist in Listing 2 dargestellt:

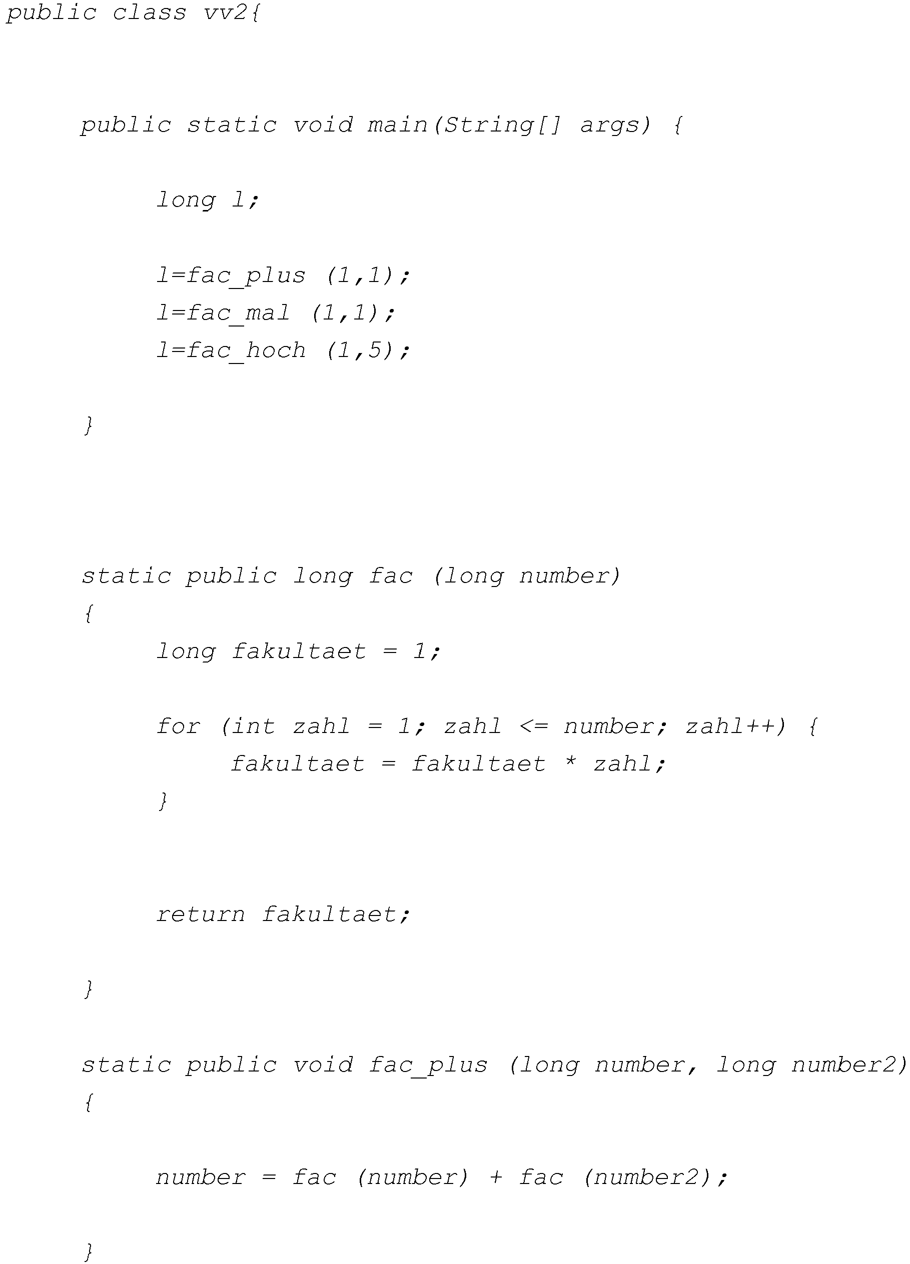

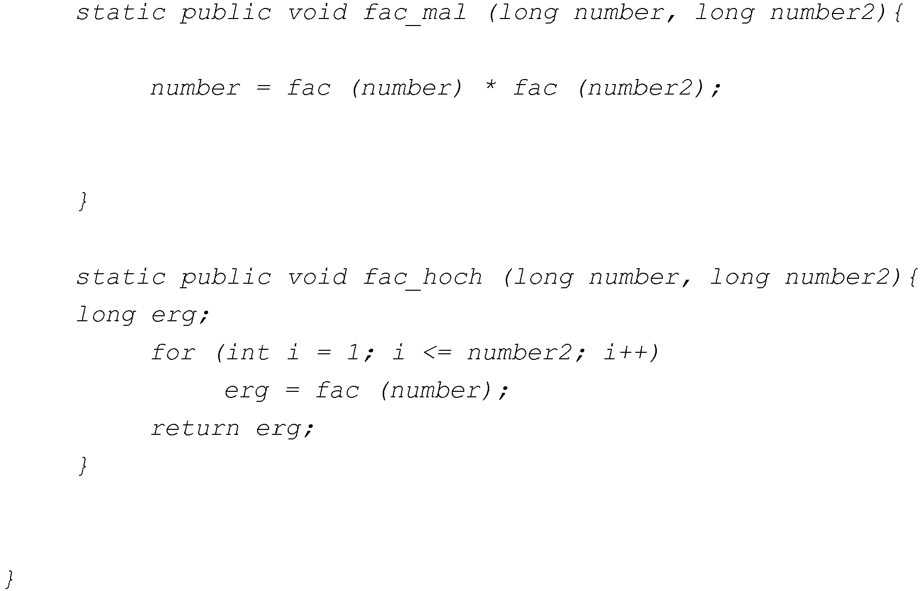

### Listing 2

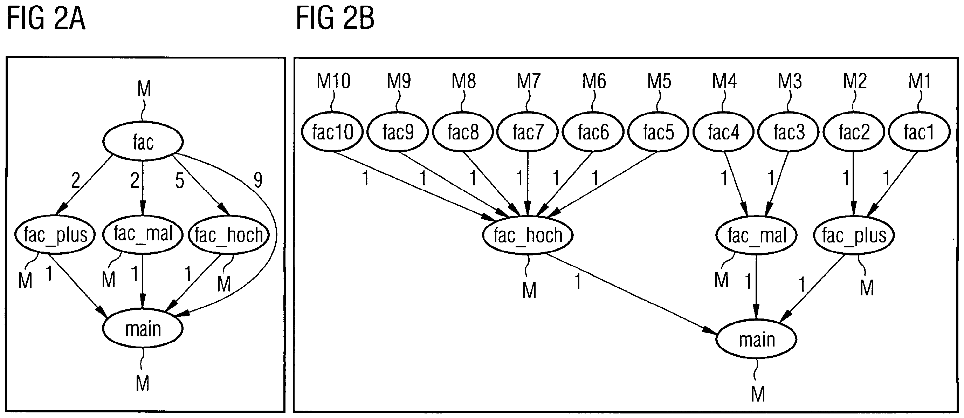

Der resultierende Ressourcen-Abhängigkeits-Graph ist in Fig. 2 dargestellt. In der linken Hälfte der Fig. 2 sind die Ressourcen-Abhängigkeiten in dem Softwaresystem sehr gut zu erkennen. Die Methode main hängt neunfach von der Methode fac ab (Kantengewicht 9). Die Methode main ruft jeweils einmal die Methoden fac_plus, fac_mal und fac hoch auf. Die Methoden fac_plus und fac_mal rufen die Methode fac jeweils zweimal und die Methode fac hoch die Methode fac fünfmal auf. Die entsprechenden Kanten sind mit jeweiligen Kapazitätsinformationen versehen. In der rechten Hälfte der Fig. 2 ist jeder Aufruf der Methode fac als eigener Knoten M1, ..., M10 dargestellt. Die Kantengewichte zwischen den Methoden fac_hoch, fac_mal und fac_plus und der Methode main ist damit immer gleich 1.

Der Code der in Listing 1 und Listing 2 dargestellten Softwaresysteme oder Programme wurde mit dem in Listing 3 gezeigten Aspekten instrumentiert. Diese übernehmen das Prolongieren der Ausführungszeit der Methoden. Nicht abgebildet ist die Auswertung der Daten, dies kann in einem automatisierten Prozess oder in einem Tabellenkalkulationsprogramm erfolgen.

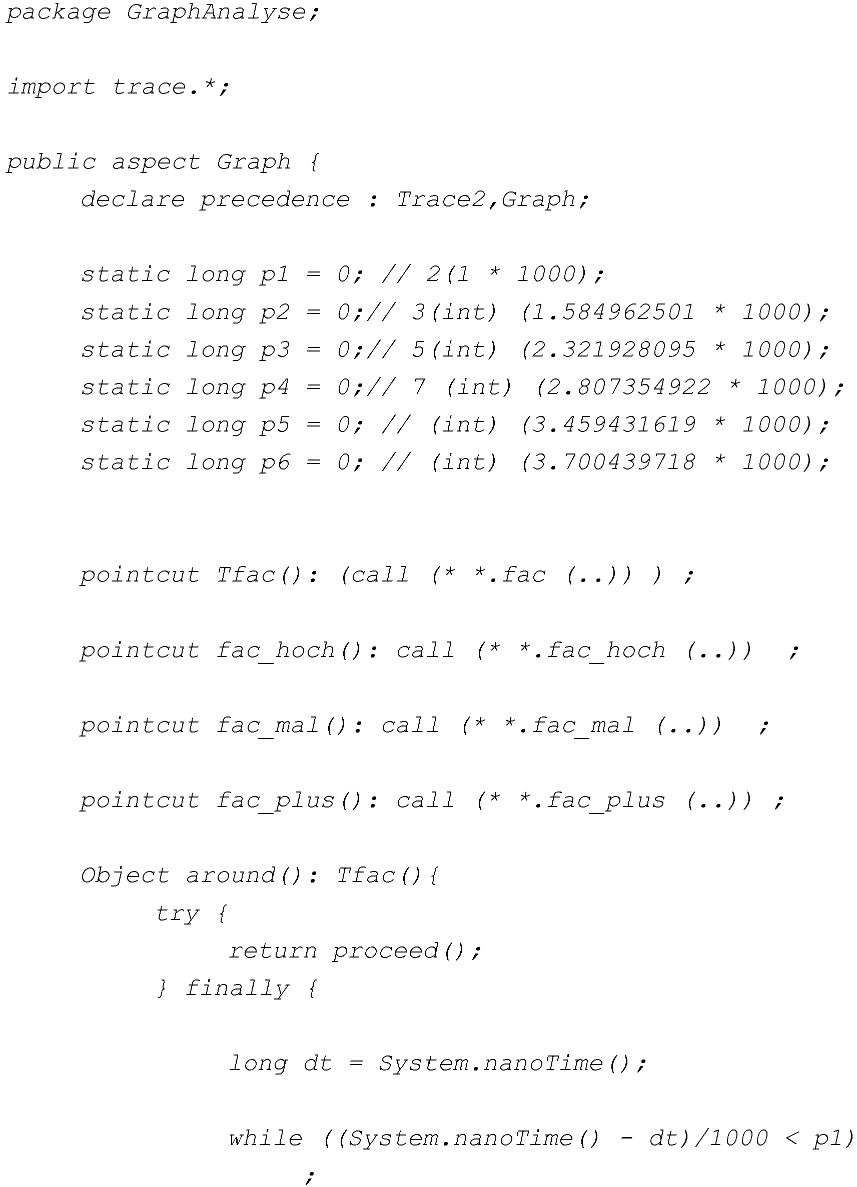

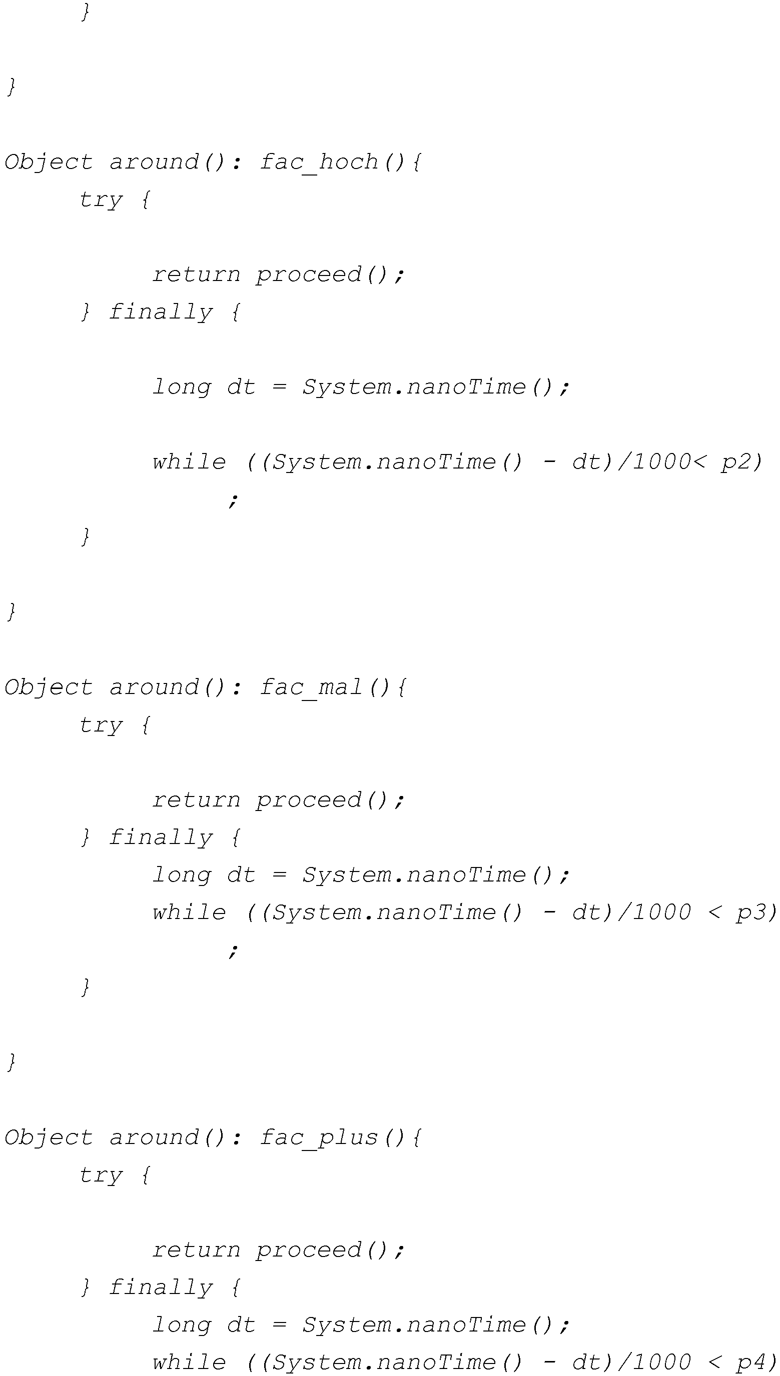

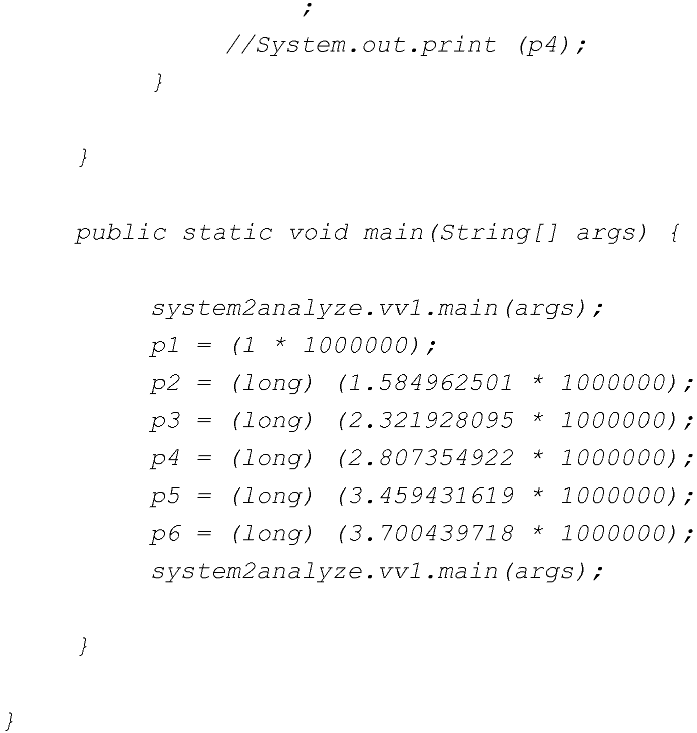

### Listing 3

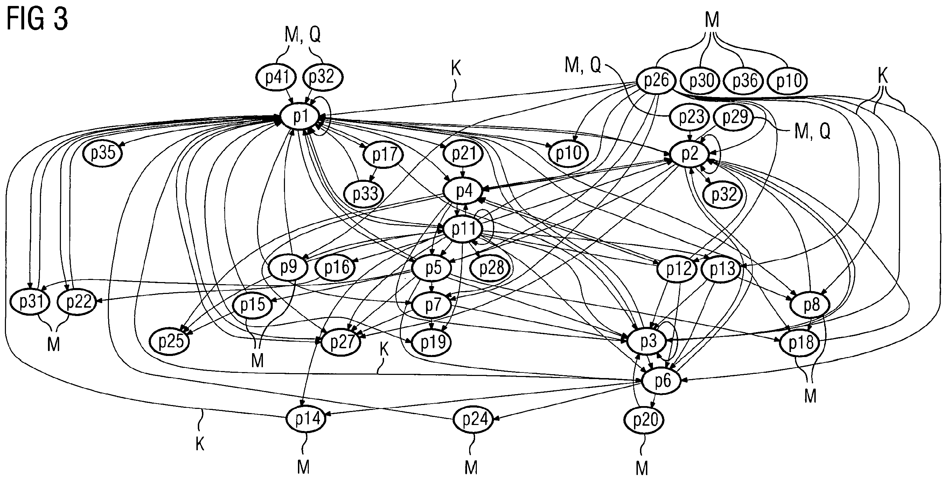

In Fig. 3 ist ein weiterer Ressourcen-Abhängigkeits-Graph eines nicht näher erläuterten, komplexen Softwaresystems dargestellt. In diesem sind Methoden mit dem Bezugszeichen M gekennzeichnet. Jede Methode pi (i ist eine reelle Zahl zur Bezeichnung eines bestimmten Moduls) stellt einen Knoten in dem Graphen dar. Mit dem Bezugszeichen K sind Kanten gekennzeichnet, die jeweils zwei Module M miteinander verbinden, welche eine Abhängigkeit zueinander aufweisen. Mit Q sind Quellen gekennzeichnet, welche in dem Netzwerk einen Knoten ohne eingehende Kanten darstellen. Dies entspricht unabhängigen Modulen. Unabhängige Module sind Module, die in ihrer Laufzeit von keinem anderen Modul abhängen. Unabhängige Module stellen eine wesentliche Information für Analysten und Systementwickler dar. Es ist deshalb empfehlenswert, auch unabhängige Module als Quellen explizit im Graphen auszuzeichnen.

Ein unabhängiges Modul kann in einem deterministischen System wie folgt erkannt werden: Alle Module des Systems werden um eine gewisse, der Messgenauigkeit angepassten, Laufzeit vergrößert. Nach einer Messung sind alle Module Quellen, die sich nur um diese Laufzeit verlängert haben. Module, die von anderen Modulen abhängen, sind durch ihre Abhängigkeiten um mehr als diese Zeit verlängert worden.

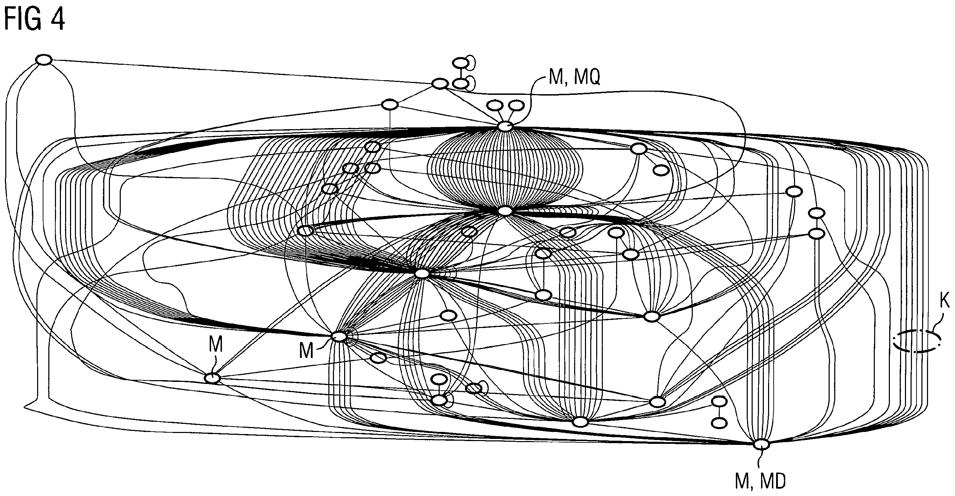

Fig. 4 zeigt eine andere Darstellung eines Ressourcenabhängigen Graphen eines Softwaresystems. Hierbei tragen die die zwei Module miteinander verbindenden Kanten keine Kapazitätsinformationen. Vielmehr wird für jeden Aufruf bzw. jede Abhängigkeit zwischen zwei Modulen eine eigene Kante K eingezeichnet. So existieren beispielsweise zwischen dem Knoten MQ, welcher ein aufrufendes Modul darstellt, und dem Knoten MD, welcher ein aufgerufenes Modul darstellt, beispielhaft sechs Verbindungen, d.h. Kanten K. Dies bedeutet, es besteht eine sechsfache Abhängigkeit zwischen den Modulen MQ und MD.

## Patentansprüche

1. Verfahren zum rechnergestützten Ermitteln der Abhängigkeiten einer Vielzahl von Modulen (M) eines technischen Systems, insbesondere eines Softwaresystems, wobei jedes der Module des Systems eine bekannte, erste Laufzeit aufweist, bei dem:
- die erste Laufzeit von jedem der Module des Systems jeweils eindeutig und unterschiedlich um den Logarithmus einer Primzahl verlängert wird, wodurch ein modifiziertes System erhalten wird;
- das modifizierte System ausgeführt wird;
- für jedes der Module des modifizierten Systems eine zweite Laufzeit gemessen wird, die sich aus der Veränderung der ersten Laufzeit eines jeden Moduls (M) ergibt; und
- aus der Analyse der zweiten Laufzeit eines jeweiligen Moduls (M) und den Logarithmen der Primzahlen ermittelt wird, ob eine Abhängigkeit zwischen dem jeweiligen Modul (M) und jedem, in der Laufzeit veränderten Module (M) besteht.

2. Verfahren nach Anspruch 1, bei dem die Differenz zwischen der ersten und der zweiten Laufzeit eines jeweiligen Moduls (M) ermittelt wird und eine Primfaktorenzerlegung der potenzierten Differenzen durchgeführt wird.

3. Verfahren nach einem der vorherigen Ansprüche, bei dem das Verändern des Ressourcenverbrauchs mittels Aspekt orientierter Programmierung erfolgt.

4. Verfahren nach einem der vorherigen Ansprüche, bei dem aus den gewonnenen Abhängigkeiten ein gerichteter Graph erstellt wird.

5. Verfahren nach Anspruch 4, bei dem die Module des Systems bestimmt werden, bei denen die zweite Laufzeit des betreffenden Moduls (M) sich ausschließlich aus der ersten Laufzeit des Moduls (M) und der vorgenommenen Verlängerung ergibt.

6. Verfahren nach Anspruch 4 oder 5, bei dem die Module des Systems Knoten des Graphen darstellen, zwischen denen Kanten (K) verlaufen, wenn eine Abhängigkeit zwischen zwei Modulen (M) bestehen, wobei Kanten (K) mit einem Gewichtungsfaktor versehen werden, der den Grad der Abhängigkeit zwischen zwei Modulen (M) wiedergibt.

7. Computerprogrammprodukt, das direkt in den internen Speicher eines digitalen Computers geladen werden kann und Softwarecodeabschnitte umfasst, mit denen die Schritte gemäß einem der vorherigen Ansprüche ausgeführt werden, wenn das Produkt auf einem Computer läuft.

## Claims

1. Method for the computer-aided determination of the dependencies of a plurality of modules (M) of a technical system, in particular of a software system, with each of the modules of the system having a known, first run-time, wherein:
- the first run-time of each of the modules of the system is extended in each case clearly and differently by the logarithm of a primary number, resulting in a modified system;
- the modified system is executed;
- a second run-time is measured for each of the modules of the modified system, this second run-time resulting from the modification of the first run-time of each module (M); and
- the analysis of the second run-time of a respective module (M) and the logarithms of the prime numbers are used to determine whether there is a dependency between the respective module (M) and each module (M) modified in the run-time.

2. Method according to claim 1, wherein the difference between the first and the second run-time of a respective module (M) is determined and a prime decomposition of the exponentiated differences is carried out.

3. Method according to one of the preceding claims, wherein the modification of the resource consumption is carried out using aspect-oriented programming.

4. Method according to one of the preceding claims, wherein a directed graph is created from the dependencies obtained.

5. Method according to claim 4, wherein the modules of the system are determined, in which the second run-time of the relevant module (M) is produced exclusively from the first run-time of the module (M) and the performed extension.

6. Method according to claim 4 or 5, wherein the modules of the system represent nodes of the graph, between which edges (K) run when there is a dependency between two modules (M), with edges (K) being provided with a weighting factor which reflects the degree of dependency between two modules (M).

7. Computer program product, which can be loaded directly into the internal memory of a digital computer and comprises software code segments, which can be used to execute the steps according to one of the preceding claims, when the product operates on a computer.

## Revendications

1. Procédé de détermination assistée par ordinateur des dépendances d'une pluralité de modules (M) d'un système technique, et plus particulièrement notamment d'un système logiciel, chacun des modules du système ayant un premier temps de marche connu, selon lequel :
- le premier temps de marche de chacun des modules du système est prolongé respectivement clairement et différemment du logarithme d'un nombre premier, ce qui permet d'obtenir un système modifié ;
- le système modifié est exécuté ;
- pour chacun des modules du système modifié, un deuxième temps de marche est mesuré, lequel résulte de la modification du premier temps de marche de chaque module (M)
et
- il est déterminé, à partir de l'analyse du deuxième temps de marche d'un module respectif (M) et des logarithmes des nombres premiers, s'il existe une dépendance entre le module respectif (M) et chaque module (M) dont le temps de marche a été modifié.

2. Procédé selon la revendication 1, selon lequel la différence entre le premier et le deuxième temps de marche d'un module respectif (M) est déterminée et une décomposition en facteurs primaires des différences élevées à une puissance est effectuée.

3. Procédé selon l'une des revendications précédentes, selon lequel la modification de la consommation de ressources a lieu au moyen d'une programmation orientée sur l'aspect.

4. Procédé selon l'une des revendications précédentes, selon lequel un graphe orienté est établi à partir des dépendances obtenues.

5. Procédé selon la revendication 4, selon lequel sont déterminés les modules du système pour lesquels le deuxième temps de marche du module concerné (M) résulte uniquement du premier temps de marche du module (M) et de la prolongation effectuée.

6. Procédé selon la revendication 4 ou 5, selon lequel les modules du système représentent des noeuds du graphe entre lesquels se trouvent des arêtes (K) lorsqu'il y a une dépendance entre deux modules (M), des arêtes (K) étant pourvues d'un facteur de pondération qui reproduit le degré de la dépendance entre deux modules (M).

7. Produit de programme informatique qui peut être chargé directement dans la mémoire interne d'un ordinateur numérique et qui comprend des segments de code logiciel permettant d'exécuter les étapes selon l'une des revendications précédentes lorsque le produit tourne sur un ordinateur.
